# EUROPÄISCHE PATENTSCHRIFT

(11) **EP 2 388 127 B1**
(45) Veröffentlichungstag und Bekanntmachung des Hinweises auf die Patenterteilung: **07.05.2014**
(21) Anmeldenummer: 11166833.1
(22) Anmeldetag: 20.05.2011
(51) Int. Cl.: B29C 49/46, B29C 49/12

(54) **Vorrichtung zum Umformen von Kunststoffvorformlingen mit Sterilraum**
Device for reforming plastic pre-forms with a sterile area
Dispositif de déformation d'ébauches en matière synthétique dotées d'un espace stérile

(30) Priorität: 20.05.2010 DE 102010022130
(43) Veröffentlichungstag der Anmeldung: 23.11.2011
(73) Patentinhaber: Krones AG, 93073 Neutraubling (DE)
(72) Erfinder: Geltinger, Florian, 93093, Donaustauf (DE); Knott, Josef, 84069, Walkenstetten/Schierling (DE); Söllner, Jürgen, 93176, Beratzhausen (DE); Handschuh, Eduard, 93093, Donaustauf (DE); Winzinger, Frank, 85354, Freising (DE); Hausladen, Josef, 93086, Wörth/Donau (DE); Lappe, Ulrich, 93073, Neutraubling (DE); Voth, Klaus, 93083, Obertraubling (DE); Martini, Oliver, 3600 Thun (CH)
(74) Vertreter: Bittner, Bernhard

(56) Entgegenhaltungen:
- EP-A1- 2 186 619
- EP-A1- 2 388 129
- EP-A1- 2 431 058
- EP-A2- 2 283 991
- WO-A2-2010/020529

## Beschreibung

Die vorliegende Erfindung bezieht sich auf eine Vorrichtung zum Umformen von Kunststoffbehältnissen. Im Bereich der getränkeherstellenden Industrie ist es bekannt, Kunststoffbehältnisse zu verwenden, wobei diese Kunststoffbehältnisse durch einen Umformungsvorgang, und insbesondere einen Blasvorgang, aus Kunststoffvorformlingen erzeugt werden. Dabei sind üblicherweise Blasräder vorgesehen, an denen mehrere Blasstationen angeordnet sind, wobei innerhalb dieser Blasstationen die Kunststoffvorformlinge durch Beaufschlagung mit Druckluft gegen eine Innenwandung der entsprechenden Blasform expandiert werden.

Für viele Getränke ist es dabei erforderlich, diese unter aseptischen Bedingungen abzufüllen. Dabei ist es bekannt, dass ein Sterilisationsprozess für das aseptische Abfüllen mit der Sterilisation der bereits fertig gestellten Flaschen in einem dafür vorgesehen Reinraum beginnt. Alle im Stand der Technik davor stattfindenden Prozesse wie die Preform-Herstellung, deren Transport, deren Erwärmung und deren Blasen zur Flasche finden in einer unsterilen Umgebung statt. In diesem Falle ist es erforderlich, eine relativ große Fläche, nämlich diejenige der fertig erzeugten Kunststoffflasche, zu sterilisieren.

Das Sterilisieren von Behältnissen, welche mit sensiblem Füllgut befüllt werden sollen, kann beispielsweise dadurch geschehen, dass das Füllgut erhitzt und heiß abgefüllt wird und mit dem heißen Füllgut die Flascheninnenseite mit entkeimt wird. Weiterhin ist es auch möglich, dass das leere Behältnis vor dem Füllvorgang separat entkeimt wird und unter aseptischen Bedingungen mit an anderer Stelle sterilisiertem Füllgut befüllt wird. Die Sterilität des leeren Behältnisses wird dabei durch chemische Desinfektionsmittel wie Peressigsäure (nass) oder Wasserstoffperoxid (trocken) erreicht. Dazu werden die Behältnisse in einen sogenannten Isolator gefahren, in dem sie mit dem Desinfektionsmittel beaufschlagt werden, welches eine bestimmte Zeit einwirken muss und anschließend mit hohem Aufwand wieder entfernt werden muss. Hierbei entsteht eine Restmengenproblematik. Direkt im Anschluss an diesen Isolator ist der aseptisch gekapselte Füller angeordnet. Diese Technologie ist jedoch noch relativ aufwendig.

Daher ist es meist wünschenswert, nicht die Kunststoffflasche selbst zu sterilisieren, sondern den Kunststoffvorformling, da dieser eine erheblich geringere Oberfläche aufweist. Allerdings ist es erforderlich, die Behältnisse nach deren Sterilisation, insbesondere durchgängig, unter sterilen Bedingungen zu transportieren, zumindest bis diese verschlossen sind, um auf diese Weise eine weitere Verunreinigung der Behältnisse zu verhindern.

Die EP 0 794 903 B1 beschreibt ein System und ein Verfahren zum sterilen Verpacken von Getränken. Dabei wird ein Getränkebehälter aus einem geformten Vorformling durch Blasformgebung gebildet, anschließend wird der Behälter mit einem sterilen Getränk befüllt und schließlich der gefüllte Behälter mit einer sterilisierten Verschlusskappe gefüllt. Dabei werden unterschiedliche Sterilisationsgrade in verschiedenen Teilen der Kammer gesteuert, wobei die Sterilisationsgrade mit dem Grad korreliert sind, der für den Verfahrensschritt erforderlich ist, der in den betreffenden Kammerteil durchgeführt wird.

In diesem Herstellungsverfahren wird der gesamte Herstellungsprozess der Flasche und auch der Füll- und Verschließprozess durchgängig unter sterilen Bedingungen durchgeführt. Dabei ist auch eine vollständige Umformungseinheit der Behältnisse in einem Reinraum angeordnet. Dieses Verfahren gewährleistet einen hohen Sterilisierungs- und Reinheitsgrad der auf diese Weise befüllten Behältnissen. Andererseits ist jedoch der Aufwand für die Sterilisierung relativ hoch, da einerseits sehr große Räume steril gehalten werden müssen und andererseits auch eine Vielzahl von Maschinenteilen, namentlich im Bereich der Blasvorrichtung vorhanden sind, die steril gehalten werden müssen.

Der vorliegenden Erfindung liegt daher die Aufgabe zugrunde, den Aufwand zum Sterilisieren bzw. Sterilhalten einer Umformungseinheit, bzw. Blaseinrichtung für Behältnisse zu reduzieren. Andererseits sollten jedoch für die Behältnisse möglichst sterile Herstellungsbedingungen geschaffen werden. Dies wird erfindungsgemäß durch eine Vorrichtung nach Anspruch 1 erreicht. Vorteilhafte Ausführungsformen und Weiterbildungen sind Gegenstand der Unteransprüche.

Eine in der WO 2010 020 529 A2 beschriebene Vorrichtung zum Umformen von Kunststoffvorformlingen zu Kunststoffbehältnissen weist eine Transporteinrichtung auf, an der eine Vielzahl von Blasstationen angeordnet ist, wobei jede dieser Blasstationen eine Blasform aufweist, innerhalb derer ein Kunststoffvorformling zu einem Kunststoffbehältnis umformbar ist und wobei die Vorrichtung einen Reinraum aufweist, innerhalb dessen die Behältnisse transportiert werden können. Weiterhin ist derjenige Bereich der Transporteinrichtung, an dem die Blasstationen angeordnet sind, in dem Reinraum angeordnet und ein weiterer Bereich der Transporteinrichtung ist außerhalb des Reinraums angeordnet.

Damit ist bei dieser Vorrichtung ein Reinraumkanal vorgesehen, durch welchen hindurch die Kunststoffvorformlinge bzw. Behältnisse in den Blasstationen geführt werden und ein weiterer Bereich der Transporteinrichtung wird außerhalb des Reinraums bewegt. Damit werden Teile der Umformungseinheit wie einer Blasmaschine, z. B. das gesamte Blasrad bzw. die Blaskavitäten durch einen Reinraum bzw. abgeschlossenen Isolator von dem Rest der Blasmaschine getrennt.

Die Anmelderin hat jedoch festgestellt, dass zwar mit der oben genannten Vorrichtung der WO 2010 020 529 A2 bereits zufriedenstellende Ergebnisse erreicht werden können, jedoch eine weitere Reduzierung der Reinraumvolumina möglich ist.

Eine weitere Vorrichtung zum Umformen von Kunststoffvorformlingen zu Behältnissen mit einem Sterilraum ist aus dem Dokument EP 2 283 991 A2 bekannt.

Eine erfindungsgemäße Vorrichtung zum Formen von Kunststoffvorformlingen zu Kunststoffbehältnissen weist eine Transporteinrichtung auf, an der eine Vielzahl von Blasstationen angeordnet ist, wobei jede dieser Blasstationen eine Blasform aufweist und die Vorrichtung weiterhin einen Reinraum aufweist, innerhalb dessen die Kunststoffvorformlinge transportiert werden können. Weiterhin weist jede Blasform eine gegenüber der Blasform bewegliche Beaufschlagungseinrichtung auf, welche die Kunststoffvorformlinge innerhalb des Reinraums mit einem gasförmigen Medium beaufschlagt. Weiterhin ist eine Antriebseinrichtung zum Bewegen der Beaufschlagungseinrichtung vorgesehen.

Erfindungsgemäß ist die Antriebseinrichtung in einem Bereich außerhalb des Reinraums angeordnet und eine Dichtungseinrichtung vorgesehen, welche den Reinraum gegenüber einem Bereich, in dem die Antriebseinrichtung angeordnet ist, abdichtet.

Es wird daher vorgeschlagen, Teile der Blasformanordnung bzw. der Blasstation außerhalb des Sterilraums anzuordnen. Auf diese Weise kann der Sterilraum insgesamt kleiner ausgestaltet sein und damit muss ein nur geringes Volumen steril gehalten werden. Bevorzugt ist ein Bereich der Beaufschlagungseinrichtung permanent innerhalb des Reinraums angeordnet und besonders bevorzugt ist dies der Bereich, der die Mündungen der Behältnisse kontaktiert.

Bei einer vorteilhaften Ausführungsform weist die Dichtungseinrichtung ein elastisches Dichtmittel auf. So kann beispielsweise ein sogenannter Faltenbalg vorgesehen sein, der den Reinraum gegenüber seiner Umgebung abdichtet.

Weiterhin kann jedoch die Dichteinrichtung auch eine Gassperre aufweisen. Diese Gassperre eignet sich insbesondere für die Abdichtung von Hubbewegungen gegeneinander. Statt einer Gassperre wäre auch eine Dampfsperre, Dampfkondensatsperre oder eine Sperre mit anderen Desinfektionsmitteln denkbar.

Bei einer weiteren vorteilhaften Ausführungsform ist an jeder Blasstation eine Reckstange zum Recken der Kunststoffvorformlinge angeordnet. Dabei ist vorteilhaft die Reckstange wenigstens teilweise innerhalb des Reinraums angeordnet und mittels Dichtmitteln gegenüber dem Bereich außerhalb des Reinraums abgedichtet. So wäre es möglich, dass auch die gesamte Reckstange innerhalb eines Dichtmittels wie eines Faltenbalgs angeordnet ist und sich gemeinsam mit diesem Faltenbalg bewegt.

Vorteilhaft ist die Reckstange mit Dichtmitteln gegenüber der Beaufschlagungsein-richtung abgedichtet.

Bei einer weiteren vorteilhaften Ausführungsform weist die Vorrichtung einen Ventilblock zur Steuerung der Zufuhr eines gasförmigen Mediums an die Beaufschlagungseinrichtung auf und die Beaufschlagungseinrichtung ist bevorzugt beweglich gegenüber diesem Ventilblock ausgebildet. Es wäre jedoch auch möglich, dass die Beaufschlagungseinrichtung gemeinsam mit dem besagten Ventilblock bewegt wird.

Vorteilhaft weist jede Blasform zwei Seitenteile und ein Bodenteil auf, wobei die Seitenteile und das Bodenteil gemeinsam einen Hohlraum ausbilden, innerhalb dessen ein Kunststoffvorformling zu einem Kunststoffbehältnis umformbar ist. Dabei sind wenigstens die diesen Hohlraum begrenzenden Bereiche der Seitenteile und des Bodenteils stets innerhalb des Reinraums angeordnet. Weiterhin ist wenigstens eine Antriebseinrichtung zum Bewegen der Seitenteile und/oder wenigstens zum Bewegen des Bodenteils vorgesehen.

Vorteilhaft ist wenigstens eine der Antriebseinrichtungen bzw. die Antriebsrichtung zum Bewegen der Seitenteile oder des Bodenteils wenigstens teilweise außerhalb des Reinraums angeordnet und eine Dichtungseinrichtung vorgesehen, welche den Reinraum gegenüber einem Bereich, in dem die Antriebseinrichtung angeordnet ist, abdichtet. Es wird daher vorgeschlagen, wenigstens eine Antriebseinrichtung, welche eine Öffnungs- oder Schließbewegung der Blasform bewirkt bzw. hierzu beiträgt außerhalb des Reinraums anzuordnen. Auf diese Weise kann das Volumen des Reinraums gegenüber dem Stand der Technik weiter reduziert werden.

Bevorzugt ist eine Antriebseinrichtung vorgesehen, um das Bodenteil zu bewegen, sowie eine weitere Antriebseinrichtung, um die Seitenteile zu bewegen. Es wäre jedoch auch möglich, dass lediglich eine Antriebseinrichtung vorgesehen ist und über eine Kopplungseinrichtung eine Bewegung der Seitenteile an eine Bewegung des Bodenteils gekoppelt wird. Dabei ist es möglich, dass diese Kopplungseinrichtung wenigstens teilweise innerhalb des Reinraum angeordnet ist, es wäre jedoch auch möglich, dass die Kopplungseinrichtung vollständig außerhalb oder vollständig innerhalb des Reinraums vorgesehen ist.

Vorteilhaft ist wenigstens eine der außerhalb des Reinraums angeordneten Antriebseinrichtungen über eine Kopplungseinrichtung mit wenigstens einem Seitenteil oder mit dem Bodenteil gekoppelt und diese Kopplungseinrichtung erstreckt sich durch eine Grenze des Reinraums hindurch. Vorteilhaft wird der Reinraum durch eine Wandung begrenzt, wobei es sich hierbei um eine flexible oder eine starre Wandung handeln kann. Diese Wandung stellt dabei vorteilhaft auch die Grenze des Reinraums zu dem nicht sterilen Außenbereich dar. Unter einer Kopplungseinrichtung wird hier insbesondere eine mechanisch wirkende Einrichtung verstanden, welche eine Bewegung der Antriebseinrichtung auf das Bodenteil oder wenigstens ein Seitenteil überträgt.

Vorteilhaft weist die Dichtungseinrichtung ein elastisches Dichtmittel auf. So wäre es möglich, dass es sich bei der Kopplungseinrichtung beispielsweise um eine Stange oder ein Gestänge handelt und an diesem Gestänge ein Dichtmittel wie beispielsweise ein Faltenbalg angeordnet ist. Für die Verwendung eines derartigen Faltenbalgs kann trotz einer Bewegung der Kopplungseinrichtung eine dichte Grenze des Reinraums aufrecht erhalten werden. Vorteilhaft folgt wenigstens ein Abschnitt des Dichtmittels hinsichtlich seiner Bewegung der Kopplungseinrichtung.

Vorteilhaft bewegt die Antriebseinrichtung das Bodenteil oder wenigstens ein Seitenteil entlang eines endlichen Pfades, d. h. entlang eines Bewegungspfades, der wenigstens einen Endpunkt und vorteilhaft zwei Endpunkte aufweist (im Gegensatz etwa zu einer Bewegung entlang einer kreisförmigen oder elliptischen Bahn).

Vorteilhaft ist eine erste Antriebseinrichtung zum Bewegen des Bodenteils und eine zweite Antriebseinrichtung zum Bewegen des Seitenteils vorgesehen und beide Antriebseinrichtungen sind außerhalb des Reinraums angeordnet.

Bei einer weiteren vorteilhaften Ausführungsform weist die Dichteinrichtung eine Gassperre auf. In diesem Falle kann in einem abzudichtenden Bereich ein Gas, wie beispielsweise Wasserdampf eingeführt werden und dieser Wasserdampf eine Gasbarriere ausbilden.

Weiterhin wäre es jedoch auch möglich, dass eine Abdichtung durch Mittel wie beispielsweise sogenannte Wasserschlösser erfolgt. Dabei kann in einem Wasserbehälter ein bewegliches Element geführt werden, so dass eine Hubbewegung möglich ist, ohne dass hierbei eine Grenze zwischen einem sterilen und einem nicht sterilen Raum durch ein Gas überschritten werden kann.

Bei einer weiteren vorteilhaften Ausführungsform weist die Vorrichtung Zuführeinrichtungen zum Zuführen einer Temperierflüssigkeit für die Blasformen auf und Anschlüsse für die Zuführeinrichtungen sind innerhalb des Sterilraums bzw. Reinraums angeordnet. Weiterhin wäre es jedoch auch möglich, dass eine Reinraumgrenze so vorgesehen ist, dass die Zuführeinrichtungen zum Zuführen der Temperierflüssigkeit und die Anschlüsse für die Zuführeinrichtungen alle im Bodenteil stets außerhalb des Reinraums angeordnet sind. Vorteilhaft ist das Bodenteil und besonders bevorzugt sind auch die Seitenteile kühlwasserbeständig ausgeführt.

Vorteilhaft weist die Vorrichtung eine Sterilisationseinrichtung auf, welche vor den eigentlichen Blasstationen angeordnet ist und welche die einzelnen Kunststoffvorformlinge sterilisiert.

Weiterhin wird vorgeschlagen, ein Blasrad der Blasmaschine d. h. den Bereich, in dem aus dem Kunststoffvorformling ein Kunststoffbehältnis entsteht zu überarbeiten. Dabei wird ein Bereich um den eigentlichen formgebenden Bereich der Maschine, d. h. den Formträger mit der Blasform herum in einer Art gekapselt, dass dieser Bereich sterilisiert werden kann. Dabei wird vorteilhaft ein Sterilraum definiert und alle Medien und Bauteile, die die Grenzen dieses Sterilraums überqueren, werden so gestaltet, dass ein einmal bei Produktionsbeginn sterilisierter Raum auch steril bleibt. Durch die erfindungsgemäße Vorgehensweise ist es auch möglich, zu verhindern, dass Fett und Umgebungsluft in den Sterilraum eindringt.

In dem Bereich des Bodenteils ist es dabei erforderlich, eine Hubbewegung auszuführen, um ein geblasenes Behältnis formen zu können. Diese Hubbewegung kann dabei durch eine Kurve angesteuert werden, welche auch im Stand der Technik gefettet werden muss. Daher ist es vorteilhaft, die besagte Kurve außerhalb des Reinraums anzuordnen. Genauer gesagt ist es möglich, dass die besagte Kurve unterhalb des Formträgers und daher auch unterhalb des Reinraums verläuft.
Alternativ ist es auch möglich, das Behältnis auf dem Kopf stehend zu blasen, indem sich die besagte Kurve für das Bodenteil oberhalb des Formträgers und daher auch oberhalb des Reinraums befindet.

Es wären jedoch auch andere Antriebseinrichtungen, wie beispielsweise Servomotoren, hydraulische oder pneumatische Hubzylinder oder dergleichen als Antriebseinrichtung denkbar. Auch könnten Linearmotoren zum Einsatz kommen.

Die oben erwähnte Sterilraumgrenze zwischen dem Reinraum und der Umgebung wird vorteilhaft so gelegt, dass eine Antriebseinrichtung, beispielsweise die Kurve und Kurvenrolle, außerhalb des Sterilraums bleiben. Vorteilhaft wird der Reinraum nach unten hin durch eine durchbrochene und vorteilhaft solide Abgrenzung begrenzt.

Dieser Durchbruch dient, wie oben erwähnt, wenigstens zur Durchführung der Bodeneinheit der Blasstation, und ggfs. auch zur Durchführung der oben erwähnten Zu- und Abführungen der Temperiermedien für die Bodenform bzw. das Bodenteil.

Dabei kann zwischen dem Bodenteil und dem Durchbruch ein Falkenbalg vorgesehen sein, der einen Abschluss des Reinraums zum Bereich der Führungskurve hin gewährleistet.

Weiterhin wäre es möglich, an dem Durchbruch den besagten Falkenbalg durch eine geeignete Klemmvorrichtung z. B. in Art einer Schlauchschelle zu fixieren. Im Fall eines Produkt-oder Formenwechsels wäre es möglich, diese Seite lösbar auszuführen.

Dabei wäre es möglich, dass der besagte Falkenbalg in das Innere des Reinraums ragt, es wäre jedoch auch möglich, dass sich der Falkenbalg bezüglich des Reinraums nach Außen erstreckt.

Vorteilhaft bewegt sich eine Wandung, welche eine Grenze des Reinraums bildet mit den einzelnen Blasstationen mit.

Vorzugsweise sind in einer zu der Transportrichtung (der Behältnisse) senkrecht stehenden Richtung bestimmte Teile der Transporteinrichtung innerhalb des Reinraums angeordnet und andere Teile außerhalb.

Vorzugsweise handelt es sich bei der Transporteinrichtung um ein Transportrad, welches sich um eine vorgegebene Achse dreht, wobei wenigstens die Achse bzw. eine Welle der Transporteinrichtung außerhalb des Reinraums angeordnet ist. Damit wird erreicht, dass der Reinraum möglichst klein gehalten wird und damit auch das Innenvolumen des Reinraums gering gehalten werden kann. Weiterhin wird auf diese Weise auch erreicht, dass eine möglichst große Anzahl an Maschinenteilen, welche nicht unmittelbar mit den Blasstationen in Kontakt sind, außerhalb des Reinraums geführt werden können und auch auf diese Weise werden Kontaminationen gering gehalten.

Vorzugsweise weist der Reinraum wenigstens abschnittsweise ein ringförmiges Profil auf bzw. ein torusartiges Profil, wobei hier jedoch der Querschnitt dieses torusartigen Profils bevorzugt von einer Kreisform abweicht. Dies bedeutet, dass die Blasstationen durch die Transporteinrichtung auf einer im Wesentlichen kreisförmigen Bahn geführt werden.

Bei einer weiteren vorteilhaften Ausführungsform ist an jeder Blasstation eine Reckstange zum Recken der Kunststoffvorformlinge angeordnet und diese Reckstange ragt wenigstens zeitweise und abschnittsweise aus dem Reinraum heraus. Die Reckstange wird bekanntlich verwendet, um die Kunststoffvorformlinge im Rahmen des Herstellungsprozesses zu dehnen. Prinzipiell wäre es auch möglich, die gesamte Reckstange stets im Inneren des Reinraums zu führen. Zu diesem Zwecke müsste jedoch der Reinraum erheblich in seinem Volumen vergrößert werden. In der bevorzugten Ausführungsform wird daher vorgeschlagen, dass die Reckstange durch eine Öffnung in dem Reinraum nach außen ragt. Um gleichzeitig Kontaminationen dieser Reckstange zu verhindern, ist besonders bevorzugt ein Faltenbalg vorgesehen, in dessen Inneren die Reckstange verläuft, so dass die Reckstange selbst nicht mit der Außenwelt in Kontakt kommt. Innerhalb des Faltenbalgs herrschen damit auch sterile Bedingungen.

Bei einer weiteren vorteilhaften Ausführungsform weist die Vorrichtung eine außerhalb des Reinraums angeordnete Antriebseinrichtung zum Bewegen der Reckstange auf und diese Antriebseinrichtung ist vorteilhaft über eine magnetische Kopplungseinrichtung mit der Reckstange gekoppelt. Mit anderen Worten wird die Bewegung der Reckstange durch eine Antriebseinrichtung erzeugt, die außerhalb des Reinraums angeordnet ist und es ist wenigstens eine magnetische Koppelungseinrichtung vorgesehen, welche die Bewegungen der Antriebseinrichtung auf die Reckstange überträgt. Auf diese Weise ist es möglich, die Bewegung der Reckstange berührungslos an die Bewegung dieser Antriebseinrichtung zu koppeln.

Bei einer weiteren vorteilhaften Ausführungsform ist die Reckstange in einer Einhausung angeordnet und damit besonders bevorzugt vollständig gegenüber der Umgebung des Reinraums abgeschirmt bzw. abgedichtet. Für diese Ausführungsform ist daher die Reckstange vorteilhaft vollständig innerhalb des Reinraums angeordnet. Auf diese Weise kann auf Dichtungseinrichtungen, welche zum Abdichten der Bewegungen der Reckstangen dienen, verzichtet werden.

So ist es beispielsweise möglich, dass die Reckstange in einem Rohr angeordnet ist, welches in Verbindung mit dem Reinraum bzw. Isolator steht. Weiterhin ist es möglich, dass unmittelbar an der Reckstange und damit auch innerhalb des Reinraums ein Magnet angeordnet ist, wobei dieser Magnet vorteilhaft zugleich eine Führungsfunktion für die Reckstange wahrnimmt. Die Bewegung dieses Magneten kann über einen Läufer erzeugt werden, der außerhalb des Reinraums angeordnet ist, und dieser wiederum kann über einen Antrieb betätigt werden. Bei diesem Antrieb kann es sich beispielsweise um einen Hydraulikzylinder, um einen Pneumatikzylinder, einen Linearmotor oder dergleichen handeln.

Bei einer weiteren vorteilhaften Ausführungsform ist oder wird die Beaufschlagungseinrichtung wenigstens zeitweise durch das gasförmige Medium zum Beaufschlagen der Kunststoffvorformlinge in Richtung der Kunststoffvorformlinge gedrängt. Aus dem Stand der Technik ist es bekannt, dass eine Blasdüse an einem Tragring oder dem Gewindebereich des Kunststoffvorformlings abdichtet, damit die Prozessluft zum Expandieren der Kunststoffvorformlinge nicht unkontrolliert aus den Behältern entweichen kann. Eine derartige Blasdüse ist beispielsweise in der DE 10 2008 034 241 A1 beschrieben.

Prozesstechnisch bedingt weist eine derartige Differenzblasdüse eine Vielzahl von Spalten auf und ist damit insbesondere für aseptische Anlagen nicht geeignet. Bei der hier beschriebene Ausführungsform wird die Prozessluft auch verwendet, um die Beaufschlagungseinrichtung und die insbesondere die Blasdüse auf den Kunststoffvorformling zum Zweck der Abdichtung zu drücken. Mit anderen Worten wird hier eine resultierende Fläche der Beaufschlagungseinrichtung, wie beispielsweise eines Blaskolbens mit Prozessluft beaufschlagt. Durch eine Vorspannung der Blasdüse dichtet die Blasdüse auf den Tragring oder dem Gewinde des Kunststoffvorformlings ab. Dadurch ergibt sich eine Druckdifferenz mit dem Umgebungsluftdruck. Dies bewirkt, dass die Höhe der Anpresskraft auf dem Tragring oder Gewinde in einem vorgegebenen Verhältnis zur Höhe des Prozessluftdrucks steht. Auf diese Weise übt die Blasdüse während des Blasprozesses auf den Tragring keine zu große Kraft aus und dichtet dennoch zuverlässig ab.

Vorteilhaft wird daher der Blasdruck auch verwendet, um die Blasdüse in Richtung des Kunststoffvorformlings bzw. dessen Mündung zu drängen.

Bei einer weiteren vorteilhaften Ausführungsform weist die Beaufschlagungseinrichtung einen Blaskolben und eine an diesem Blaskolben angeordnete Blasdüse auf, und vorteilhaft ist der Blaskolben ortsfest mit der Blasdüse bzw. einem Teil der Blasdüse verbunden. Der mit dem Blaskolben ortsfest verbundene Teil der Blasdüse ist vorteilhaft über ein elastisches Verbindungselement (welches insbesondere ebenfalls ein Bestandteil der Blasdüse ist) mit einem weiteren Teil der Blasdüse verbunden. Es wird daher vorgeschlagen, dass zwischen einem festen und einem beweglichen Teil der Beaufschlagungseinrichtung eine elastische bzw. flexible Verbindung besteht, welche besonders bevorzugt beispielsweise durch einen Kunststoff und insbesondere ein Elastomer gebildet sein kann, andererseits jedoch auch durch Metall und besonders bevorzugt Federstahl. Auf diese Weise ergeben sich im Vergleich zum Stand der Technik erheblich weniger Spalte, in denen sich Keime aufhalten können.

Vorteilhaft weist daher die Beaufschlagungseinrichtung bzw. die Blasdüse einen Dichtbereich auf sowie einen Bereich, auf der sie ortsfest mit dem Blaskolben verbunden ist. Dieser Dichtbereich kann dabei vorteilhaft eine axiale Relativbewegung in Bezug zu dem Blaskolben bei Beaufschlagung mit Druck ausführen. Die Verbindung zwischen diesen beiden Bereichen der Blasdüse erfolgt besonders bevorzugt spaltlos und elastisch.

Bei einer weiteren vorteilhaften Ausführungsform weist die Blasdüse eine oder mehrere Flächen auf, die besonders bevorzugt aus Kunststoff oder Metall ausgeführt sind.

Auf diese Weise ergibt sich, dass die im Dichtungsbereich auf den Kunststoffvorformling wirkende Kraft von der Druckhöhe der Prozessluft abhängig ist.

Bei einer weiteren vorteilhaften Ausführungsform ist die Blasdüse in mehreren Teilen ausgebildet. Auf diese Weise wird der Ein- und Ausbau erleichtert und auch ein schnellerer bzw. unkomplizierterer Garniturenwechsel ermöglicht.

Bei einer weiteren vorteilhaften Ausführungsform ist die Blasdüse derart ausgeführt, dass sich im Bereich der Prozessluft nur sehr wenige Spalte ergeben.

Vorzugsweise ist der Reinraum von mehreren Wandungen begrenzt und wenigstens eine dieser Wandungen ist gegenüber einer weiteren Wandung bewegbar und insbesondere drehbar angeordnet.

Vorzugsweise ist eine radial außen angeordnete Wandung des Reinraum stationär angeordnet. Damit kann eine Wandung mit einem insbesondere zylinderförmigen Außenprofil vorgesehen sein, welche den Reinraum begrenzt. Vom Inneren dieser Wandung ist eine weitere Wandung vorgesehen, die den Reinraum zu der anderen Seite hin begrenzt und die drehbar angeordnet ist. Vorzugsweise wird diese innen angeordnete Wandung mit den einzelnen Blasstationen gedreht. Vorzugsweise liegen sich die erwähnte drehbare Wand und die stationär angeordnete Wand gegenüber. Weiterhin wird der Reinraum von einer Wandung in Form eines Deckels begrenzt, wobei dieser Deckel vorzugsweise einteilig mit der drehbaren Wand ausgebildet ist.

Vorzugsweise ist zwischen wenigstens zwei Wandungen bzw. einer Wandung und einem Deckel eine Dichtungseinrichtung angeordnet. Diese Dichtungseinrichtung dichtet bevorzugt gegenüber einander bewegliche Teile gegeneinander ab. So wäre es beispielsweise möglich, zwischen einer Wandung und einem Deckel ein so genanntes Wasserschloss vorzusehen, bei dem ein hier bevorzugt ringförmiger Wasserkanal vorgesehen ist, in dem ein Abschnitt des gegenüber diesem Wasserkanal beweglichen Teils geführt wird.

Bei einer weiteren vorteilhaften Ausführungsform weist die Vorrichtung eine Zuführeinrichtung auf, um der Transporteinrichtung die Kunststoffvorformlinge zu übergeben und diese Zuführeinrichtung ist innerhalb des Reinraums angeordnet. Damit weist hier bevorzugt der Reinraum eine Ausbuchtung bzw. eine Abweichung von dem ansonsten kreisförmigen Querschnitt auf, und in dieser Ausbuchtung ist entsprechend die Zuführeinrichtung wie beispielsweise ein Transportstern für die Vorformlinge angeordnet. Auf diese Weise kann eine lückenlose Übergabe der Behältnisse von der Zuführeinrichtung an die Transporteinrichtung innerhalb eines Sterilraums erfolgen.

Bei einer weiteren vorteilhaften Ausführungsform weist die Vorrichtung auch eine Abführeinrichtung auf, um von der Transporteinrichtung die ausgebildeten Kunststoffbehältnisse zu übernehmen und diese Abführeinrichtung ist ebenfalls innerhalb des Reinraums angeordnet. Auf diese Weise kann auch beim Abtransport der Behältnisse ein Reinraum gewahrt werden. Damit ist es möglich, dass ein Einbringen von Vorformlingen aus vorgelagerten Aggregaten in den Isolator bzw. Reinraum sowie ein Ausbringen der Flaschen zu einem nächsten Aggregat unter Reinraumbedingungen möglich ist. Der Isolator bzw. Reinraum kann mit Reinigungs- und Sterilisationsmedien beaufschlagt werden.

Bei einer weiteren vorteilhaften Ausführungsform ist innerhalb des Reinraums ein Sterilgas vorgesehen und dieses Sterilgas steht unter einem Druck, der höher ist als ein Druck außerhalb des Reinraums. Damit kann der Reinraum optional durch das Einbringen von sterilisierter Luft auf einem höheren Druckniveau als die Umgebung gehalten werden, wodurch das Eindringen von Mikroorganismen verhindert werden kann. Weiterhin besteht die Möglichkeit, dem Reinraum kontinuierlich einen antimikrobiellen Wirkstoff zuzuführen und auf diese Weise ein hygienisches Umfeld aufrecht zu erhalten.

Durch einen räumlich begrenzten Reinraum in der Blasvorrichtung ist es möglich, vorher entkeimte Vorformlinge ohne Rekontamination sowohl außen als auch innen während des Streckblasvorgangs zum Füller zu transportieren. Des Weiteren ist der Reinraum im Vergleich zur gesamten Umformungsvorrichtung einfacher auf einem keimarmen Level zu halten.

Bei einem Verfahren zum Umformen von Kunststoffvorformlingen zu Kunststoffbehältnissen werden die Kunststoffvorformlinge mittels einer Transporteinrichtung, an der eine Vielzahl von Blasstationen angeordnet ist, transportiert und während dieses Transports zu Kunststoffbehältnissen umgeformt. Dabei werden die Blasstationen wenigstens abschnittsweise und bevorzugt vollständig durch einen Reinraum transportiert.

Dabei weisen die Blasstationen jeweils eine Blasform auf, sowie eine gegenüber der Blasform bewegliche Beaufschlagungseinrichtung, welche die Kunststoffvorformlinge innerhalb des Reinraums mit einem gasförmigen Medium beaufschlagt. Erfindungsgemäß bewegt eine Antriebseinrichtung die Beaufschlagungseinrichtung und diese Antriebseinrichtung ist in einem Bereich außerhalb des Reinraums angeordnet und weiterhin ist eine Dichtungseinrichtung vorgesehen, welche den Reinraum gegenüber einem Bereich, in dem die Antriebseinrichtung angeordnet ist, abdichtet.

Bevorzugt wird auch wenigstens ein Bereich der Transporteinrichtung außerhalb des Reinraums bewegt. Bei einem weiteren bevorzugten Verfahren werden die Blasstationen auf einer kreisförmigen Bahn bewegt und besonders bevorzugt ständig innerhalb des Reinraums bewegt.

Weitere Vorteile und Ausführungsformen ergeben sich aus den beigefügten Zeichnungen:
Darin zeigen:
- Fig. 1: eine schematische Darstellung einer Anlage zum Herstellen von Kunststoffbehältnissen nach dem Stand der Technik;
- Fig. 2: eine Ansicht eines Reinraums im Bereich einer Blasstation nach dem Stand der Technik;
- Fig. 3: eine schematische Darstellung einer Vorrichtung nach dem Stand der Technik;
- Fig. 4a-4b: zwei grob schematische Darstellungen einer erfindungsgemäßen Anordnung;
- Fig. 5: eine Seitenansicht einer erfindungsgemäßen Blasstation;
- Fig. 6a-6b: zwei Darstellungen zur Veranschaulichung eines die Reckstange umgebenden Faltenbalgs;
- Fig. 7a-7b: zwei Darstellungen zur Veranschaulichung einer Gassperre;
- Fig. 8a-8c: drei Darstellungen zur Veranschaulichung des Reinraums;
- Fig. 9: eine Ausführungsform einer Beaufschlagungseinrichtung;
- Fig. 10: eine Ausgestaltung einer Beaufschlagungseinrichtung in einer bevorzugten Ausführungsform;
- Fig. 11: eine Ausführungsform einer Beaufschlagungseinrichtung in einer bevorzugten Ausführungsform;
- Fig. 12: eine weitere Ausführungsform zur Veranschaulichung einer Reckstangenführung;
- Fig. 13: die Darstellung einer Kopplung für die Reckstangenführung;
- Fig. 14: eine weitere Darstellung für eine Reckstangenführung;
- Fig. 15: eine weitere Darstellung zur Veranschaulichung der Reckstangenbewegung; und
- Fig. 16: drei Darstellungen einer Kopplungseinrichtung zum Bewegen einer Reckstange;

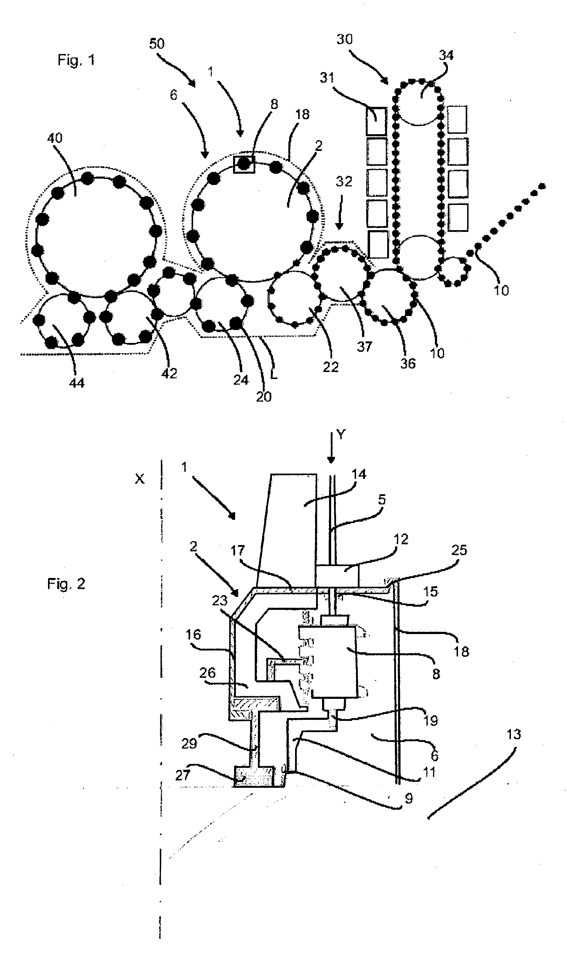

Figur 1 zeigt eine schematische Darstellung einer Anlage nach dem Stand der Technik zum Herstellen von Kunststoffbehältnissen. Diese Anlage 50 weist eine Heizeinrichtung 30 auf, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch, wie oben erwähnt, durch elektromagnetische Strahlung möglich. Insbesondere wird in diesem Bereich eine Innensterilisation der Vorformlinge durchgeführt.

Das Bezugszeichen 6 bezeichnet in seiner Gesamtheit einen Reinraum, dessen Außenbegrenzungen hier durch die punktierte Linie L angedeutet ist. Man erkennt, dass dieser Reinraum 6 in dem Bereich der Sterilisationseinheit 32 beginnt. In diesem Bereich können Schleuseneinrichtungen vorgesehen sein, um die Kunststoffvorformlinge in den Reinraum 6 einzuführen, ohne dass dabei zu viel Gas innerhalb des Reinraums verloren geht.

Der Reinraum ist, wie durch die gestrichelte Linie L angedeutet, an die Außengestalt der einzelnen Anlagenkomponenten angepasst. Auf diese Weise kann das Volumen des Reinraums reduziert werden.

Das Bezugszeichen 1 bezeichnet in ihrer Gesamtheit eine Umformungsvorrichtung, bei der an einem Transportrad 2 eine Vielzahl von Blasstationen 8 angeordnet ist, wobei hier lediglich einer dieser Blasstationen 8 dargestellt ist. Mit diesen Blasstationen 8 werden die Kunststoffvorformlinge 10 zu Behältnissen 20 expandiert. Obwohl hier nicht detailliert gezeigt, befindet sich nicht der gesamte Bereich des Transporteinrichtung 2 innerhalb des Reinraums 6, sondern der Reinraum 6 bzw. Isolator ist gewissermaßen als Mini-Isolator innerhalb der gesamten Vorrichtung realisiert. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 1 übergibt und das Bezugszeichen 24 auf eine Abführeinrichtung, welche die hergestellten Kunststoffbehältnisse 20 von der Umformungsvorrichtung 1 abführt. Man erkennt, dass der Reinraum 6 in dem Bereich der Zuführeinrichtung 22 und der Abführeinrichtung 24 an jeweils Ausnehmungen aufweist, welche diese Einrichtungen 22, 24 aufnehmen. Auf diese Weise kann in besonders vorteilhafter Weise eine Übergabe der Kunststoffvorformlinge 10 an die Umformungsvorrichtung 1 bzw. eine Übernahme der Kunststoffbehältnisse 20 von der Umformungsvorrichtung 1 erreicht werden.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt. Dabei befindet sich auch die Befüllungseinrichtung 40 innerhalb des besagten Reinraums 6. Auch im Falle der Befüllungseinrichtung wäre es möglich, dass nicht die gesamte Befüllungseinrichtung 40 mit beispielsweise einem Reservoir für ein Getränk vollständig innerhalb des Reinraums 6 angeordnet sind, sondern auch hier lediglich diejenigen Bereiche, in denen tatsächlich die Behältnisse geführt werden. Insoweit könnte auch die Befüllungseinrichtung in ähnlicher Weise aufgebaut sein wie die Vorrichtung 1 zum Umformen von Kunststoffvorformlingen 10.

Wie erwähnt, ist der Reinraum 6 im Bereich der Vorrichtung 1 auf einen geringst möglichen Bereich reduziert, nämlich im Wesentlichen auf die Blasstationen 8 selbst. Durch diese kleinbauende Gestaltung des Reinraums 6 ist es leichter und schneller möglich, einen Reinraum überhaupt herzustellen und auch die Sterilhaltung in der Betriebsphase ist weniger aufwändig. Auch wird weniger Sterilluft benötigt, was zu kleineren Filteranlagen führt und auch die Gefahr von unkontrollierter Wirbelbildung wird reduziert.

Figur 2 zeigt eine Detaildarstellung der Vorrichtung 1 im Bereich einer Blasstation 8. Eine Vielzahl derartiger Blasstationen 8 wird mit einer Transporteinrichtung 2 drehend um eine Achse X bewegt. Die Blasstation 8 ist, wie in Figur 2 ersichtlich, innerhalb des Reinraums 6, der hier kanalartig ausgebildet ist, geführt. Dieser Reinraum 6 wird abgeschlossen durch eine bewegliche Seitenwand 16 und einen einteilig mit dieser Seitenwand 16 ausgebildeten Deckel 17. Diese Seitenwand 16 und der Deckel 17 drehen dabei mit der Blasstation 8 mit.

Das Bezugszeichen 18 bezieht sich auf eine weitere Wandung, welche den Reinraum 16 begrenzt. Diese Wandung 18 ist hier eine außen liegende Wandung, welche stationär angeordnet ist. Zwischen dem Deckel 17 und der Wandung 18 ist eine Dichtungseinrichtung 25 vorgesehen, welche die gegeneinander beweglichen Elemente 17 und 18 gegeneinander abdichtet, beispielsweise, wie oben erwähnt, unter Verwendung eines Wasserschlosses. Der untere Bereich der Wandung 18 ist fest und abdichtend an einem Boden 13 angeordnet. Innerhalb des Reinraums 6 und hier unmittelbar an der Wandung 16 anliegend ist ein Träger 26 vorgesehen, der sich ebenfalls drehend bewegt und an dem wiederum eine Halteeinrichtung 23 vorgesehen ist, welche die Blasstation 8 hält.

Das Bezugszeichen 11 bezieht sich auf eine Folgeeinrichtung, welche von einer Führungskurve 9 betätigt werden kann, um die Blasstation auf ihrem Weg durch den Reinraum 6 zu öffnen und zu schließen, um insbesondere den Kunststoffvorformling in die Blasstation einzulegen und um ihn auch wieder zu entnehmen. Dabei ist eine Führungskurve 9 auch innerhalb des Reinraums 6 angeordnet. Es wäre jedoch beispielsweise auch möglich, etwa bereits einen Abschnitt 19 unterhalb der einzelnen Blasstationen 8 aus dem Reinraum 6 herauszuführen.

Die Transporteinrichtung 2 kann noch weitere Elemente aufweisen, welche oberhalb des Reinraums 6 angeordnet sind.

Der Träger 26 ist dabei fest auf einem Haltekörper 29 angeordnet und dieser Haltekörper ist wiederum beweglich gegenüber dem Boden 13. Dabei bezieht sich das Bezugszeichen 27 auf eine weitere Dichtungseinrichtung, welche auch in diesem Bereich eine Abdichtung der gegeneinander beweglichen Bereiche 13 und 29 bewirkt.

Das Bezugszeichen 5 bezieht sich auf eine Reckstange, welche gegenüber der Blasstation beweglich ist, um die Kunststoffvorformlinge 10 in ihrer Längsrichtung zu recken. Dabei ist auf dem Deckel 17 hier ein Schlitten 12 angeordnet, demgegenüber die Reckstange in der Richtung Y beweglich ist. Das Bezugszeichen 14 bezieht sich auf eine weitere Halterung für diesen Schlitten 12 der Reckstange 5.

Man erkennt, dass bestimmte Bereiche der Reckstange während des Blasvorgangs sowohl außerhalb des Reinraums 6 als auch innerhalb des Reinraums sind. Zu diesem Zweck ist es möglich, außerhalb des Reinraums 6 bzw. oberhalb des Schlittens 12 eine Schutzeinrichtung wie einen Faltenbalg vorzusehen, der die Reckstange 5 umgibt, so dass kein Bereich der Reckstange 5 unmittelbar mit der Außenumgebung in Berührung kommt.

Die oben erwähnte Heizeinrichtung zum Erwärmen der Kunststoffvorformlinge ist bevorzugt ebenfalls aseptisch ausgeführt. Dies bedeutet, dass die Kunststoffvorformlinge bereits im Bereich der Heizeinrichtung 30, anders als in Fig. 1 gezeigt, durch einen Reinraum geführt werden können und sich dieser Reinraum beispielsweise durchgehend über die Blasmaschine bis zu dem Füller erstreckt. Dabei ist es möglich, dass die vollständige Heizeinrichtung 30 innerhalb eines Sterilraums angeordnet ist, es wäre jedoch auch möglich, dass auch hier insbesondere der Bereich, in dem die Kunststoffvorformlinge transportiert werden, gegenüber der Umgebung als Sterilraum gekapselt ist. So wäre es beispielsweise möglich, dass die Kunststoffvorformlinge mittels Dornen transportiert werden, die in ihre Mündung eingreifen und die Dornen dabei durch eine Wandung in einen Reinraum hineinragen. Dieser Reinraum könnte ebenfalls mit einem Überdruck beaufschlagt werden, so dass keine Umgebungsluft in diesen Reinraum eindringen kann.

Die Heizeinrichtung könnte dabei als Infrarotheizeinrichtung ausgestaltet sein, wie in Fig. 1 dargestellt. Vorteilhaft wird jedoch hier als Heizeinrichtung eine Mikrowellenheizeinrichtung verwendet. Derartige Mikrowellenheizeinrichtungen zum Erwärmen von Kunststoffvorformlingen sind aus dem Stand der Technik an sich bekannt. Dabei könnte eine Vielzahl von Mikrowellenheizstationen beispielsweise an einem Trägerrad angeordnet sein. Über Schleusen könnten die Kunststoffvorformlinge diesen einzelnen Heizstationen zugeführt werden. Aufgrund der Ausführung mit einzelnen Heizstationen eignet sich eine mikrowellenbasierte Heizeinrichtung in besonderer Weise für die Kombination mit Sterilräumen.

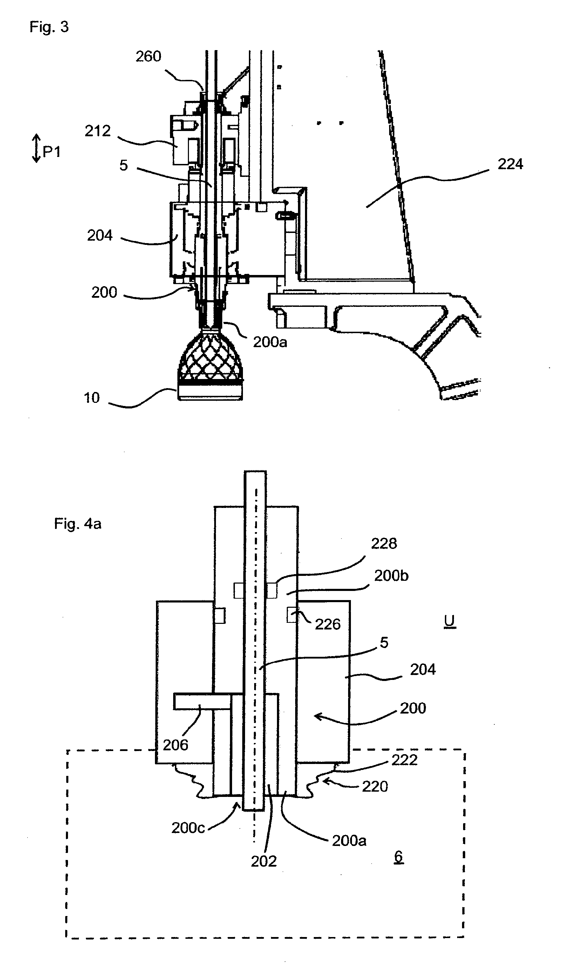

Fig. 3 zeigt eine teilweise Darstellung einer Vorrichtung nach dem Stand der Technik. Dabei ist hier eine insgesamt mit 200 bezeichnete Beaufschlagungseinrichtung vorgesehen, welche eine Blasdüse 200a aufweist, die während des Expansionsvorgangs an eine Mündung eines Behältnisses 10 angelegt wird, um dieses zu expandieren. Das Bezugszeichen 204 bezieht sich auf einen Ventilblock, in dem die einzelnen zur Expansion des Behältnisses benötigenden Gaszufuhren geregelt werden. Eine Reckstange 5 dient, wie oben erwähnt, zum Recken des Kunststoffvorformlings.

Das Bezugszeichen 212 bezeichnet einen Schlitten, der in der Richtung P1 beweglich angeordnet ist. Mithilfe dieses Schlittens wird die Beaufschlagungseinrichtung 200 ebenfalls in Richtung des Doppelpfeils P1 bewegt und beispielsweise auf die Mündung oder einen Tragring des Behälters 10 aufgesetzt. Es wäre jedoch auch denkbar, die Beaufschlagungseinrichtung bzw. Blasdüse auf die Blasform aufzusetzen und gegenüber der Blasform abzudichten. Als Antriebseinrichtung dient eine in Fig. 3 nicht dargestellte Führungsrolle, die gegenüber einer Führungskurve (nicht gezeigt) läuft. Das Bezugszeichen 260 bezieht sich auf eine Dichtungseinrichtung, mit der die Reckstange gegenüber dem Schlitten 212 abgedichtet ist. Der Schlitten 212 wiederum ist verschiebbar an einem Träger 224 angeordnet.

Bei der in Fig. 3 gezeigten Darstellung handelt es sich bei der Dichtungseinrichtung 260 der Reckstange 5 um eine Dichtung, wie beispielsweise einen Wellendichtring, einen Glydring, einen Quartring oder dergleichen. Diese Dichtungen werden jedoch keinen hohen Hygieneansprüchen gerecht. Genauer können beim Eintauchen der Reckstange in das Behältnis Keime aus dem Außenbereich in das Behältnis 10 gelangen. Dem gegenüber muss bei einer Aseptikausführung der Vorrichtung sichergestellt werden, dass durch die Reckstange 5 keine schädlichen Keime in die herzustellende Flasche transportiert werden.

Fig. 4a zeigt eine grob schematische Darstellung einer erfindungsgemäßen Anordnung. Auch hier ist wieder eine in ihrer Gesamtheit mit 200 bezeichnete Beaufschlagungseinrichtung vorgesehen, welche hier einteilig ausgebildet ist, und in ihrem unteren Bereich eine Blasdüse 200a aufweist, sowie in ihrem oberen Bereich einen sogenannten Blaskolben 200b. Jedenfalls der Bereich der Blasdüse 200a ragt zumindest zeitweise in einen Sterilraum 6 der Vorrichtung hinein. Das Bezugszeichen 204 kennzeichnet hier auch wieder einen Ventilblock, wobei hier beispielsweise über eine Zuführung 206 dem (nicht gezeigten) Behältnis Druckluft zugeführt werden kann. Die Beaufschlagungseinrichtung 200 ist hier in ihrer Gesamtheit gegenüber dem hier stationär angeordneten Ventilblock 204 beweglich. Es wäre jedoch auch denkbar, dass auch der Ventilblock mit bewegt wird. Mittels einer Dichtungseinrichtung 226, die hier beispielsweise als Ringdichtung ausgeführt sein kann, ist die Beaufschlagungsein-richtung 200 gegenüber dem Ventilblock 204 abgedichtet.

Der Blaskolben bzw. Teile des Blaskolbens 200b befinden sich dabei zeitweise innerhalb des Reinraums 6 (insbesondere während die Behältnisse mit dem gasförmigen Medium beaufschlagt werden) und zeitweise außerhalb des Reinraums 6 (beispielsweise während die Kunststoffvorformlinge in die Blasform eingeführt bzw. die geblasenen Behältnisse aus der Blasform entnommen werden).

Auch die Reckstange 5 ist hier beweglich angeordnet, genauer gesagt beweglich gegenüber der Beaufschlagungseinrichtung 200. Das Bezugszeichen 228 kennzeichnet eine zweite Dichtungseinrichtung, mit der die Reckstange 5 gegenüber der Beaufschlagungseinrichtung 200 abgedichtet wird. Das Bezugszeichen 222 kennzeichnet hier eine Dichtungseinrichtung wie einen Faltenbalg, der bei dieser Ausführungsform auch gleichzeitig die Reinraumgrenze darstellt. Diese bedeutet, dass oberhalb dieses Faltenbalgs 222 der Sterilraum endet. Es wäre jedoch auch denkbar, dass sich der Sterilraum auch oberhalb des Faltenbalgs 222 fortsetzt, oder dass anstelle des Faltenbalgs eine unten genauer beschriebene Gasdichtung vorgesehen ist.

Bei der in Fig. 4a gezeigten Ausführungsform ist damit die Unterseite 200c der Beaufschlagungseinrichtung, welche letztlich an das Behältnis angelegt wird innerhalb des Sterilraums angeordnet. Auch der Raum 202, der innerhalb der Beaufschlagungseinrichtung 200 ausgebildet wird, um ein Gas zuzuführen, ist hier Bestandteil des Reinraums 6.

Damit taucht bei der in Fig. 4a gezeigten Ausführungsform die Blasdüse 200a in einen Isolator bzw. Reinraum 6 ein und ist mit dem Faltenbalg 222 gegenüber der Umgebung U abgeschirmt. Eine weitere Dichtungseinrichtung 228, welche ebenfalls als O-Ring ausgeführt sein kann, dichtet die Reckstange 5 gegenüber der Beaufschlagungseinrichtung 200 ab.

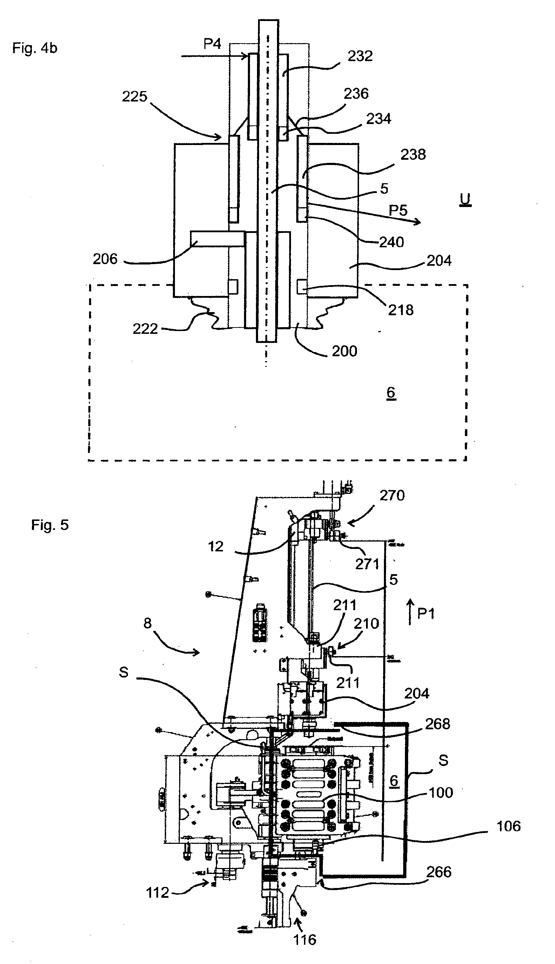

Bei der in Fig. 4b gezeigten Ausführungsform taucht ebenfalls die Blasdüse 200a in den Sterilraum 6 ein, ist jedoch hier über eine in ihrer Gesamtheit mit 225 gekennzeichnete Gassperre gegenüber der Umgebung abgeschirmt. Dieser Gassperre wird entlang des Pfeils P4 ein Sperrmedium, wie Dampfkondensat oder auch eine Flüssigkeit zugeführt. Dieses Sperrmedium gelangt zunächst in einen Aufnahmeraum 232, der die Reckstange 5 umgibt. Das Bezugszeichen 234 kennzeichnet eine Dichtungseinrichtung, welche diesen Aufnahmeraum 232 gegenüber der Reckstange 5 abdichten. Damit bewirkt der Raum 232 eine Abdichtung der Reckstange 5 gegenüber der Beaufschlagungseinrichtung 200 bzw. dem Blaskolben 200b.

Über Verbindungsleitungen 236 wird das Sperrmedium anschließend in einen zweiten Raum 238 geführt, der die Beaufschlagungseinrichtung 200 in Umfangsrichtung umgibt. Auch dieser Raum 238 wird nach unten hin durch Dichtungseinrichtungen 240 abgedichtet. Dieser zweite Abdichtungsraum 238 dient zu einer Abdichtung der Beaufschlagungseinrichtung 200 nach außen, d. h. gegenüber dem Ventilblock 204. Anschließend kann das Sperrmedium hier wieder entlang Pfeils P5 aus dem zweiten Raum 238 austreten. Es wäre jedoch auch möglich, die beiden Aufnahmeräume separat mit einem Sperrmedium zu versorgen und dieses auch wieder separat abzuführen.

Bevorzugt wird daher die Beaufschlagungseinrichtung 200 mit zwei Dichteinrichtungen, welche beide unterhalb der Antriebseinrichtung 210 angeordnet sind, abgedichtet.

Das Bezugszeichen 218 kennzeichnet weitere Dichtungseinrichtungen, um die Beaufschlagungseinrichtung 200 gegenüber dem Ventilblock 204 abzudichten. Diese Dichtungseinrichtung kann wieder als O-Ring ausgeführt sein.

Bevorzugt handelt es sich bei dem Sperrmedium um ein Gas, wobei hier jedoch auch Dampf, oder ein Dampfkondensat als Gas verstanden wird. Daneben kann jedoch auch eine Flüssigkeitssperre vorgesehen sein.

Daneben kann die Dichtungseinrichtung 234 auch dazu dienen, dass vor der Dichtungseinrichtung 234 bzw. der Sperre der Druck des Sterilraums 6 gegenüber der Umgebung U abgedichtet wird.

Vorteilhaft ist diese Dichtungseinrichtung 234 und besonders bevorzugt sind auch die Dichtungseinrichtungen 240, 226, 220 und 218 temperaturbeständig ausgebildet. Die Dichtungseinrichtung 240 liegt dabei vorteilhaft zwischen dem Sterilraum 6 und der Umgebung bzw. vor der Dichtungseinrichtung 234.

Die Reckstange 5 taucht ebenfalls in den Reinraum 6 auf und ist über den oberen Teil der Dichtungseinrichtung 225, d. h. insbesondere den ersten Raum 232 gegenüber der Umgebung abgeschirmt. Auch hier kann es sich bei der Dichtungseinrichtung um eine Dampfsperre, ein Dampfkondensat oder auch eine Flüssigkeitssperre handeln. Mittels der Dichtungseinrichtung 234, welche hier vor dem Raum 232 eingesetzt ist, kann wiederum der Druck des Sterilraums gegenüber der Umgebung abgedichtet werden.

Es wäre auch möglich, den Sterilraum 6 über die Beaufschlagungseinrichtung bzw. (nicht gezeigte) Ventile der Druckbeaufschlagungseinrichtung zu reinigen und auch zu sterilisieren.

Fig. 5 zeigt eine weitere Darstellung einer erfindungsgemäßen Vorrichtung. Dabei ist hier genauer eine Blasstation 8 gezeigt, welche eine Blasform bzw. einen Blasformträger 100 aufweist, in dessen Innerem die Kunststoffvorformlinge zu Kunststoffbehältnissen expandiert werden. Die dicke durchgezogene Linie S bezeichnet hier die Sterilraumgrenze. Man erkennt, dass der Sterilraum relativ eng um die einzelnen Blasformen ausgebildet ist.

Eine Antriebseinrichtung 112 bewerkstelligt das Öffnen und Schließen der beiden Blasformhälften bzw. der Seitenteile des Formträgers. Diese Antriebseinrichtung 112, die hier ebenfalls kurvenrollengesteuert sein kann, ist außerhalb des Sterilraums 6 angeordnet. Anstelle eines Antriebs durch Kurvenrollen wären jedoch auch andere Antriebe, wie beispielsweise elektrische Antriebe, Linearmotoren, hydraulische oder pneumatische Antriebe und dergleichen denkbar. Das Bezugszeichen 116 kennzeichnet (nicht im Detail dargestellt) eine weitere Antriebseinrichtung, welche eine Bewegung einer Bodenform 106 bewerkstelligt. Bezugszeichen 266 und 268 kennzeichnen Bereiche, in denen drehende Teile einer Wandung des Sterilraums gegenüber stationären Teilen, beispielsweise mittels Wasserschlössern, abgedichtet werden.

Oberhalb des Reinraums 6 ist auch hier wieder der Ventilblock 204 dargestellt, sowie eine in ihrer Gesamtheit mit 210 bezeichnete Antriebseinrichtung zum Bewegen der Blasdüse. In der Fig. 5 ist dabei lediglich eine Kurvenrolle gezeigt, nicht jedoch die hier zugehörige Führungskurve. Die Kurvenrolle bewegt wiederum einen Schlitten, der hier in der Längsrichtung (P1) beweglich gelagert ist.

Das Bezugszeichen 270 kennzeichnet eine weitere Antriebseinrichtung zum Bewegen der Reckstange 5. Auch hier ist lediglich die Führungsrolle 271 dargestellt, die gegenüber einer (nicht gezeigten) Führungskurve beweglich ist. Das Bezugszeichen 211 kennzeichnet die entsprechende Führungsrolle der Antriebseinrichtung 210. Das Bezugszeichen 272 kennzeichnet einen Schlitten, der zur Bewegung der Reckstange 5 dient.

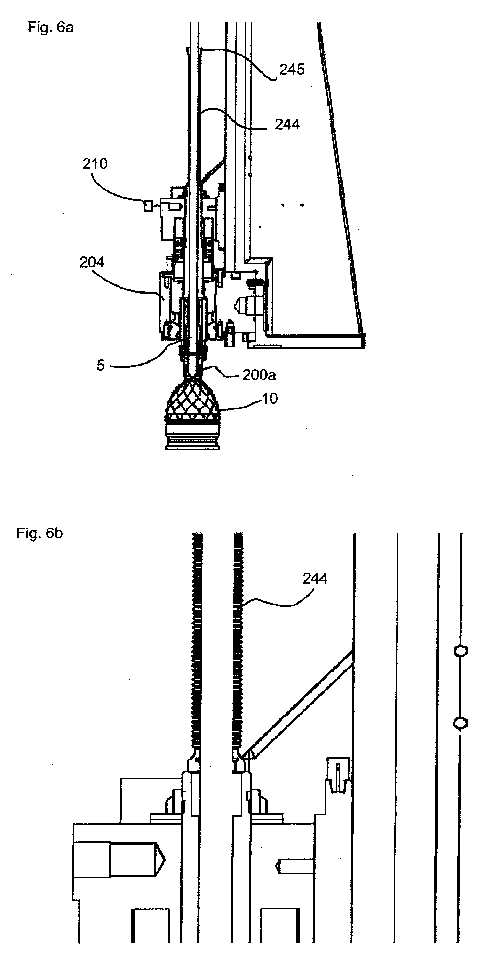

Fig. 6a und 6b zeigen eine weitere Ausführungsform für eine hygienegerechte Abdichtung. Bei dieser Ausführungsform wird die Reckstange 5 zumindest abschnittsweise innerhalb einer Dichtungseinrichtung, wie eines Faltenbalges 244 geführt. Genauer gesagt, wird hier auf der Reckstange 5 ein Faltenbalg 244 aufgebracht. Dieser ersetzt die in Fig. 3 dargestellte überfahrene "Dichtung" und trennt die sterile Seite der Reckstange, die der zu blasenden Flasche zugewandt ist, gegenüber der unsterilen Seite.

Dabei ist hier vorteilhaft die Reckstange 5 derart aufgebaut, dass sie in vorgegebenen Zeitintervallen mit einem geeigneten Mittel, wie beispielsweise H2O, sterilisierbar ist. Auf diese Weise kann verhindert werden, dass Keime aus dem Außenbereich U durch die Reckstange in das Behältnis gelangen können. Der Faltenbalg 244 kann auch mit einem Befestigungsmittel 245 an der Reckstange befestigt sein.

Weiterhin wäre es bei den gezeigten Ausführungsformen auch möglich, dass der Ventilblock 204 durch Erwärmung entkeimt wird. Dabei ist es möglich, die Bauteile des Ventilblocks auf eine Temperatur bis zu 100° bzw. bis zu 130° zu erwärmen. Auch die Reckstange 5 kann dabei erwärmt werden, um sie zu sterilisieren.

Fig. 6b zeigt eine Detaildarstellung der in Fig. 4a gezeigten Anordnung. Man erkennt, dass der Faltenbalg 244 auch eine Bewegung der Reckstange in dem für eine Streckung der Behältnisse nötigen Umfang durchführen kann.

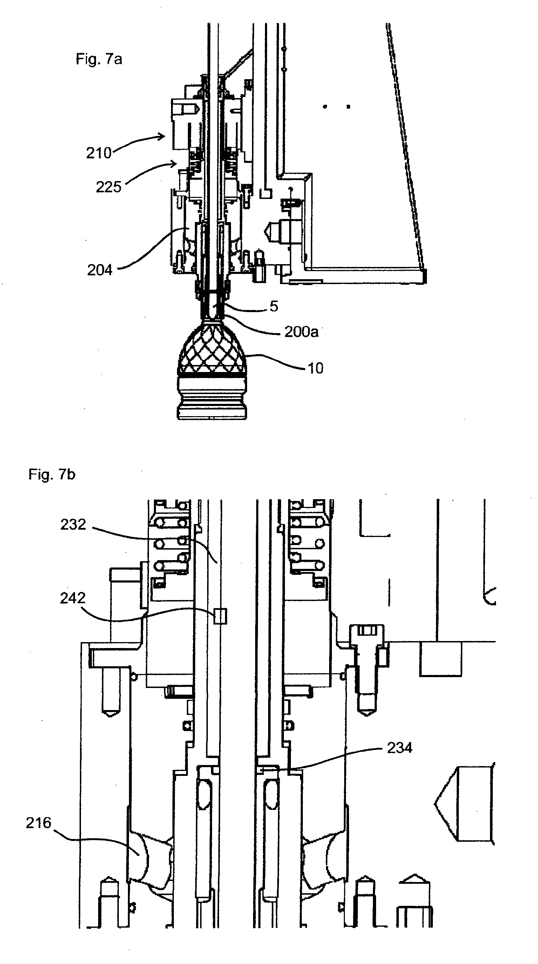

Die Fig. 7a und 7b zeigen eine weitere Ausführungsform, welche zur Sterilisierung der Reckstangen dient. Dabei ist hier eine medien- bzw. dampfhinterspülte Reckstange vorgesehen, bei der in dem Raum hinter der jeweiligen Dichtung Dampf ansteht und damit permanent die Reckstange 5 sterilisiert. Beim Ausfahren der Reckstange gelangt dadurch die sterilisierte Reckstange in Kontakt mit dem zu blasenden Behältnis. Der im Rückraum eindringende Teil der Reckstange wird durch den anstehenden Dampf sofort wieder sterilisiert. Auf diese Weise ist gewährleistet, dass keinerlei Keime durch die Reckstange 5 in das Behältnis 10 transportiert werden. Auch hier ist diese Dampfsperre 225 oberhalb des Ventilblocks 204 angeordnet. Andererseits ist die Antriebseinrichtung 210 oberhalb der Dampfsperre vorgesehen, sodass auch hier die Antriebseinrichtung 210 außerhalb des Sterilraums 6 vorgesehen ist.

Bei der Detaildarstellung der Fig. 7b erkennt man wiederum den Raum 232, in dem das Sperrmedium eingeführt ist. Weiterhin ist auch die Dichtungseinrichtung 234 dargestellt, die diesen Raum nach unten hin abdichtet. Innerhalb des Raums 232 kann weiterhin ein Temperatursensor 242 (nur schematisch gezeigt) vorgesehen sein, der die Temperatur des Sperrmediums kontrolliert und auf diese Weise eine effiziente Sterilisierung sicherstellt.

Das Bezugszeichen 216 bezieht sich auf einen Kanal, durch welchen hindurch Blasluft zum Expandieren des Behältnisses zugeführt wird.

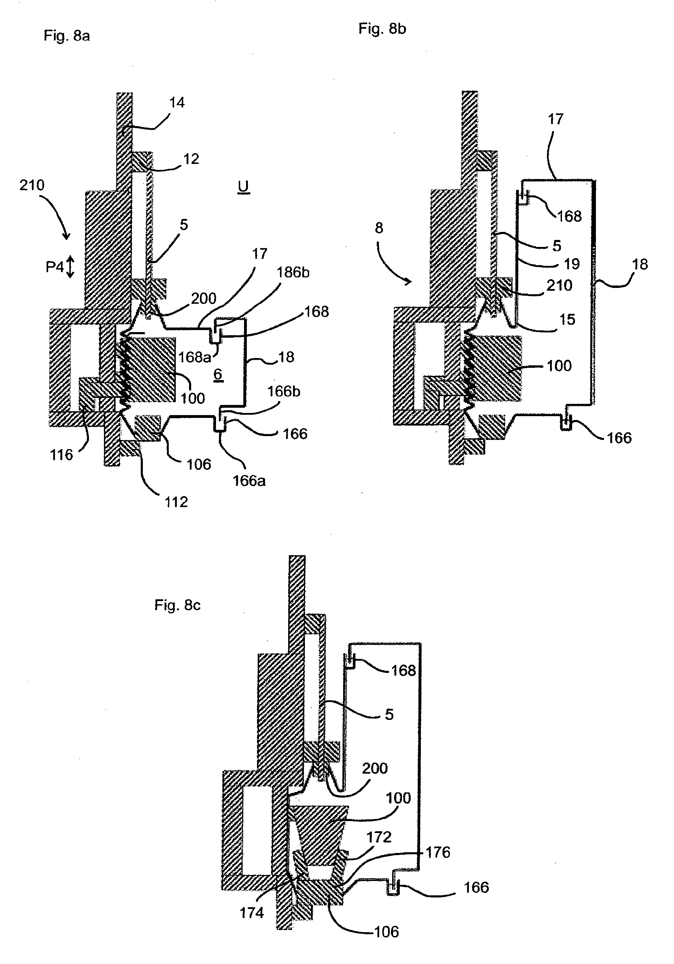

Die Fig. 8a bis 8c zeigen Darstellungen zur Veranschaulichung der konkreten Ausgestaltung des Reinraums 6, in dem die Blasform 100 angeordnet ist. Man erkennt hier wieder die Wandung 18 die stationär angeordnet ist und den Reinraum 6 gegenüber der Umgebung U abtrennt. Die Bezugszeichen 166 und 168 beziehen sich auf sogenannte Wasserschlösser, welche eine Abdichtung des Reinraums 6 erlauben. Zu diesem Zweck sind jeweils ringförmige Kanäle 166a und 168a vorgesehen, in denen hier ebenfalls ringförmige Segmente 168b und 166b eintauchen. In den ringförmigen Kanälen 166a und 168a befindet sich ein flüssiges Medium, wie beispielsweise Wasser. Bei dieser Ausführungsform bewegen sich die Kanäle. Es wäre jedoch auch denkbar, dass die Kanäle an der Wandung 18 und damit stationär angeordnet sind.

Das Bezugszeichen 5 bezieht sich auf die Reckstange, welche ebenfalls in den Reinraum 6 einführbar ist. Das Bezugszeichen 200 kennzeichnet die Blasdüse, welche zum Umformen der Kunststoffvorformlinge auf die Blasform bzw. die Behältnisse aufsetzbar ist, um auf diese Weise die darin angeordneten Kunststoffvorformlinge mit Druckluft zu beaufschlagen. Die Reckstange 5 wird mittels eines Schlittens 12, der an einem Träger 14 verschiebbar angeordnet ist, bewegt. Das Bezugszeichen 210 bezieht sich auf die Antriebseinrichtung, welche hier die Blasdüse 200 entlang des Doppelpfeils P4 bewegt. Weiterhin ist auch die Antriebseinrichtung 112 dargestellt, die zum Bewegen des Bodenteils 106 dient, sowie die Antriebseinrichtung 116, die zum Bewegen der beiden Seitenteile der Blasform 100 dient.

Fig. 8b zeigt eine weitere Ausgestaltung einer erfindungsgemäßen Blasstation 8. Man erkennt, dass hier das auch in Fig. 8a gezeigte obere Wasserschloss 168 sehr weit nach oben versetzt ist, um beispielsweise im Fall eines Blasformwechsels die Zugänglichkeit für den Bediener zu erleichtern. Weiterhin ist es hier auch denkbar, dass die Wandung 18 bzw. eine Haube, deren Bestandteil diese Wandung 18 ist, als Ganzes hochfahrbar ist, um auf diese Weise einen Blasformwechsel zu ermöglichen. Der Reinraum weist hier einen Knick 15 auf, der zwischen dem Deckel 17 und der senkrechten Wandung 19 angeordnet ist. Die senkrechte Wandung 19 liegt dabei oberhalb der Ventileinrichtung 210 und maximal 50 cm, bevorzugt maximal 25 cm entfernt von der Reckstange 5.

Fig. 8c zeigt eine weitere Ausführungsform einer erfindungsgemäßen Vorrichtung. Bei dieser Ausführungsform ist die Heranführung des Bodenteils 106 an die Blasform 100 kombiniert mit einer Verschließung der Seitenteile der Blasform. Damit ist hier eine Topfverriegelung vorgesehen, welche bei einer Aufwärtsbewegung der beiden Seitenführungen 172, 174 gleichzeitig auch die Seitenteile der Blasform verschließt. Vorteilhaft weist die Blasform 100 hier glatte Außenflächen auf, an denen die Seitenführungen 172, 174 leichter entlang gleiten können. Auch hier ist das obere Wasserschloss 168 relativ weit oben dargestellt. Es wäre jedoch auch hier eine Kombination mit der in Fig. 7a gezeigten Ausführungsform der beiden Wasserschlösser 166, 168 denkbar. An mindestens dem Basisteil 176 oder einem der Seitenteile 102, 104 sind dabei Kunststoffgleitlager angeordnet, die im Gegensatz zu Laufrollen ein hygienisches Design unterstützen. Laufrollen wären jedoch denkbar. Dieses Prinzip könnte genauso auf die Blasdüse 200 übertragen werden.

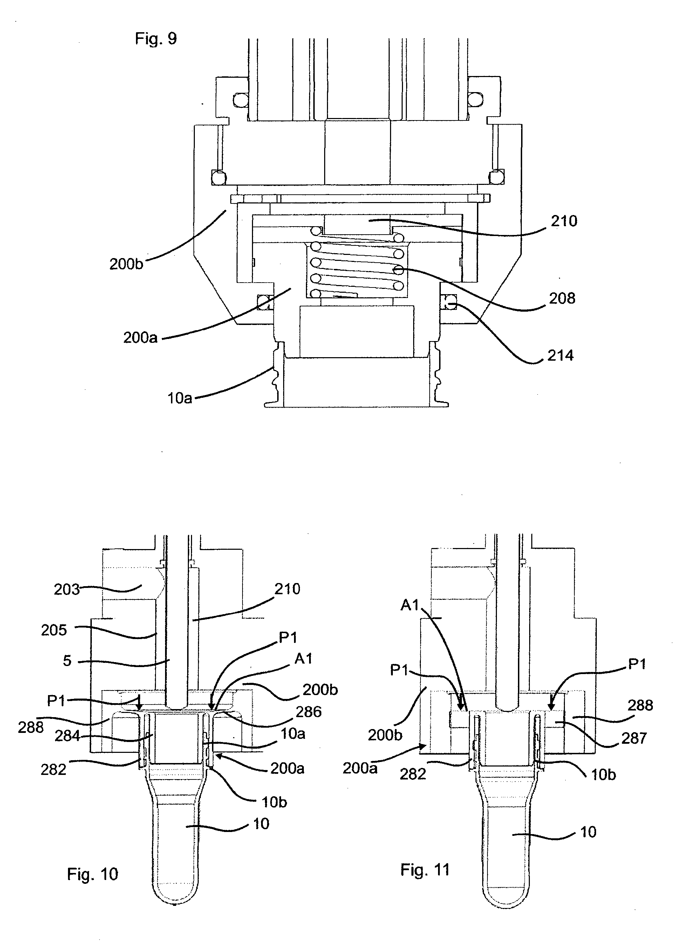

Fig. 9 zeigt eine Ausführungsform einer Beaufschlagungseinrichtung 200. Diese Beaufschlagungseinrichtung weist hier einen Blaskolben 200b, an dem eine Düse 200a angeordnet ist. Dabei ist eine Federungseinrichtung 208 vorgesehen, welche die Blasdüse 200a und den Blaskolben 200b auseinanderdrängt, und so die Blasdüse gegenüber einer Mündung 10a des Kunststoffvorformlings vorspannt. Damit wird auch durch die Federungseinrichtung 208 die Blasdüse auf den Kunststoffvorformling zu dessen Abdichtung vorgespannt. Das Bezugszeichen 214 bezieht sich auf eine Dichtungseinrichtung, welche die Blasdüse 200a gegenüber dem Blaskolben 200b abdichtet. Über eine Zuführleitung 210 wird die Blasluft bzw. Prozessluft der Blasdüse und damit auch dem Kunststoffvorformling 10 zugeführt. Man erkennt, dass bei der in Fig. 9 gezeigten Ausführungsform eine Vielzahl von Spalten, insbesondere auch zwischen dem Blaskolben 200b und der Blasdüse 200a auftreten, welche insbesondere für aseptische Anwendungen problematisch sind.

Fig. 10 zeigt eine weitere Ausgestaltung einer erfindungsgemäßen Vorrichtung. Man erkennt hier wiederum den Kunststoffvorformling 10, der eine Mündung 10a aufweist, sowie eine Blasdüse 200a, die hier mit einem Bereich an einem Tragring 10b des Kunststoffvorformlings anlegbar ist. Daneben weist bei dieser Ausgestaltung optional (oder alternativ) die Blasdüse 200a auch einen Abschnitt 284 auf, der in das Innere des Kunststoffvorformlings 10 eindringt. Man erkennt, dass hier die Blasdüse 200a über eine umlaufende und hier auch flexible Verbindung 286 verfügt. Damit ist hier die Blasdüse 200a teilweise ortsfest mit dem Blaskolben 200b verbunden, wobei zwischen einem Teil ortsfest an dem Blaskolben anliegenden Teil 288 der Blasdüse 200a und dem an den Kunststoffvorformling 10 anlegbaren Teilen 282, 284 eine elastische Verbindung 286 besteht. Diese elastische Verbindung ist hier aus Metall, wie beispielsweise Federstahl ausgebildet.

Durch diese Verbindung 286 wird auch eine hier umlaufende Fläche A1 ausgebildet, welche während der Expansion der Kunststoffvorformlinge 10 auch mit Prozessluft über die Zuführleitung 210 beaufschlagt wird (Pfeil P1). Das Bezugszeichen 203 kennzeichnet eine Zuführleitung für die Prozessluft. Weiterhin ist in Fig. 10 auch die Reckstange 5 dargestellt, welche ebenfalls in den Kunststoffvorformling 10 zu dessen Dehnung einführbar ist.

Während des Expansionsvorgangs wirkt die Blasluft auch (vgl. Pfeil P1) auf die Übergangsbereiche 286 und damit wird durch die Blasluft auch ein weiteres Vorspannen der Blasdüse 200a gegenüber dem Kunststoffvorformling 10 und damit eine verbesserte Dichtwirkung bewirkt.

Fig. 11 zeigt eine weitere Ausführungsform einer erfindungsgemäßen Blasdüse 200a. Bei dieser Ausführungsform verfügt ebenfalls die Blasdüse 200a über eine Verbindungseinrichtung 287. Auch diese elastische Verbindung 286 wird, wie durch den Pfeil P1 veranschaulicht, mit dem Blasdruck beaufschlagt und bewirkt damit, dass die Blasdüse 200a gegenüber dem Kunststoffvorformling 10 durch den Blasdruck vorgespannt wird. Hier ist der Verbindungsbereich 287 aus einem elastischen Material, wie insbesondere einem Elastomer, gebildet.

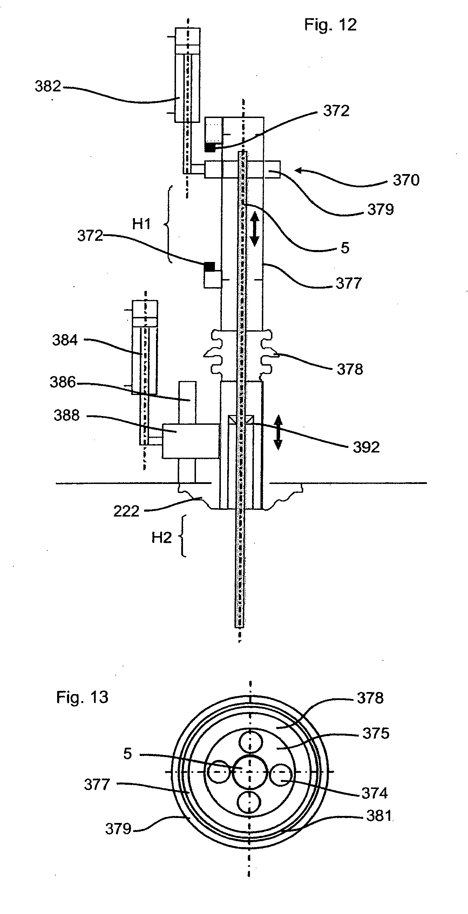

Fig. 12 zeigt eine Ausführungsform zur Veranschaulichung einer Reckstangenbewegung. Bei dieser Ausführungsform ist eine Reckstange 5 innerhalb eines abgeschlossenen Gehäuses 377 angeordnet und damit auch gegenüber der Umgebung des Reinraums 6 abgedichtet. Weiterhin ist eine in ihrer Gesamtheit mit 370 bezeichnete Kopplungseinrichtung vorgesehen, welche teilweise im Inneren des Gehäuses 377 an der Reckstange 5 angeordnet ist und außerhalb des Gehäuses 377 ein weiteres Kopplungselement 379 aufweist. Das Bezugszeichen 382 kennzeichnet eine Antriebseinrichtung, wie beispielsweise einen pneumatischen Antrieb, der zum Bewegen des Kopplungselements 379 dient.

Die Bezugszeichen 372 beziehen sich auf Endanschläge, welche den Hub des Kopplungselements 379 und damit auch den Hub der Reckstange begrenzen. Diese Endanschläge 372 können dabei aus einem elastischen Material bestehen, um die Bewegung entsprechend zu dämpfen.

Das Bezugszeichen H1 kennzeichnet den Hub, den die Reckstange 5 ausführt.

Das Bezugszeichen 384 kennzeichnet eine weitere Antriebseinrichtung, die zum Bewegen der Beaufschlagungseinrichtung 200 dient. Das Bezugszeichen H2 kennzeichnet entsprechen den Hub dieser Beaufschlagungseinrichtung. Dabei ist auch hier ein Kopplungselement 388 vorgesehen, welches hier jedoch direkt an der Beaufschlagungseinrichtung 200, d. h. gegebenenfalls auch ohne magnetische Kopplung angeordnet ist. Das Bezugszeichen 386 kennzeichnet eine Führungseinrichtung, die zum Führen des Kopplungselements 388 dient. Das Bezugszeichen 378 kennzeichnet eine Dichtungseinrichtung wie einen Faltenbalg, welcher die Relativbewegung zwischen der Beaufschlagungseinrichtung 200 und dem Gehäuse 377 aufnimmt, sodass die Reckstange 5 vollständig innerhalb eines sterilen Raums angeordnet werden kann. Das Bezugszeichen 392 kennzeichnet eine Dichtungseinrichtung, welche die Bewegung der Reckstange gegenüber der Beaufschlagungseinrichtung 200 lagert und dabei vorzugsweise auch abdichtet. Daneben ist auch hier wieder die Dichtungseinrichtung 222 in Form eines Faltenbalgs vorgesehen, welche auch die Bewegung der Beaufschlagungseinrichtung 200 entlang des Pfeils H2 aufnimmt. Man erkennt, dass der Hub der Beaufschlagungseinrichtung 200 geringer als der Hub H1 der Reckstange 5. Das Bezugszeichen 6 kennzeichnet wiederum den Reinraum.

Fig. 13 zeigt eine Schnittdarstellung auf die Kopplungseinrichtung 370. Man erkennt hier zunächst die Reckstange 5, an der ein Kolbenelement 375 angeordnet ist. An diesem Kolbenelement sind mehrere Öffnungen 374 vorgesehen, durch welche bei der Bewegung des Kolbenelements 375 gegenüber dem Gehäuse 377 Luft hindurchtreten kann. An diesem Kolben ist ein magnetisches Element 378 angeordnet.

Das Bezugszeichen 377 bezieht sich auf das Gehäuse bzw. die Gehäusewandung, innerhalb der die Reckstange angeordnet ist. Das Bezugszeichen 379 kennzeichnet das mit dem magnetischen Element 378 zusammenwirkende Kopplungselement. Dabei kann es sich ebenfalls um einen Magneten handeln, wobei dieser äußere Magnet 379 bezüglich dem inneren Magneten 378 entgegengesetzt polarisiert sein kann, sodass die entsprechende Anziehungswirkung erreicht wird. Wie in Fig. 13 ersichtlich, erstreckt sich das Kopplungselement 379 in Umfangsrichtung vollständig um die Reckstange bzw. um das Gehäuse 377. Zwischen dem Kopplungselement 379 und dem Gehäuse 377 ist bevorzugt ein umlaufender Spalt 381 ausgebildet, durch den die Auf- und Abwärtsbewegung erleichtert ist.

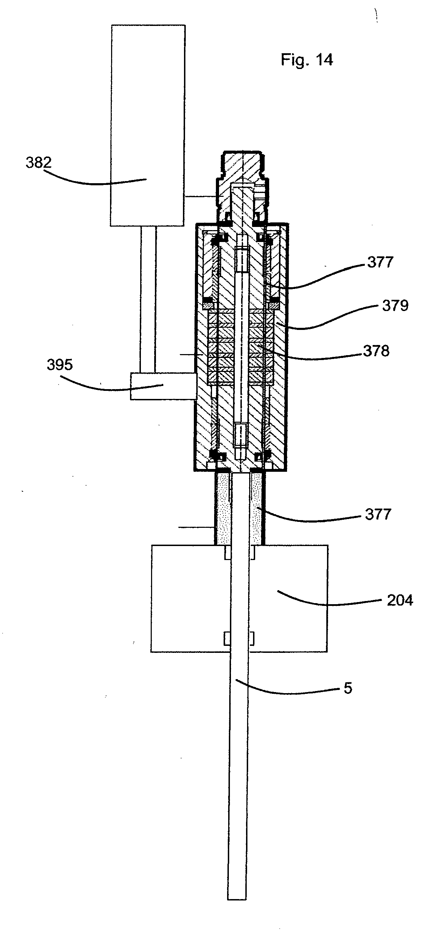

Fig. 14 zeigt eine weitere Darstellung der oben erläuterten Bewegungsvorrichtung. Auch hier ist wieder die Antriebseinrichtung 382 dargestellt sowie der über ein Befestigungselement 395 hieran angeordnete Träger 390. In diesem Träger ist das umlaufende magnetische Element 379 angeordnet und wird damit mit dem Träger 390 auf und ab bewegt. Ebenfalls erkennt man in Fig. 14 wiederum das innere magnetische Element 378. Das Bezugszeichen 204 bezieht sich auch hier wieder auf den Ventilblock, innerhalb dessen die Reckstange 5 geführt ist.

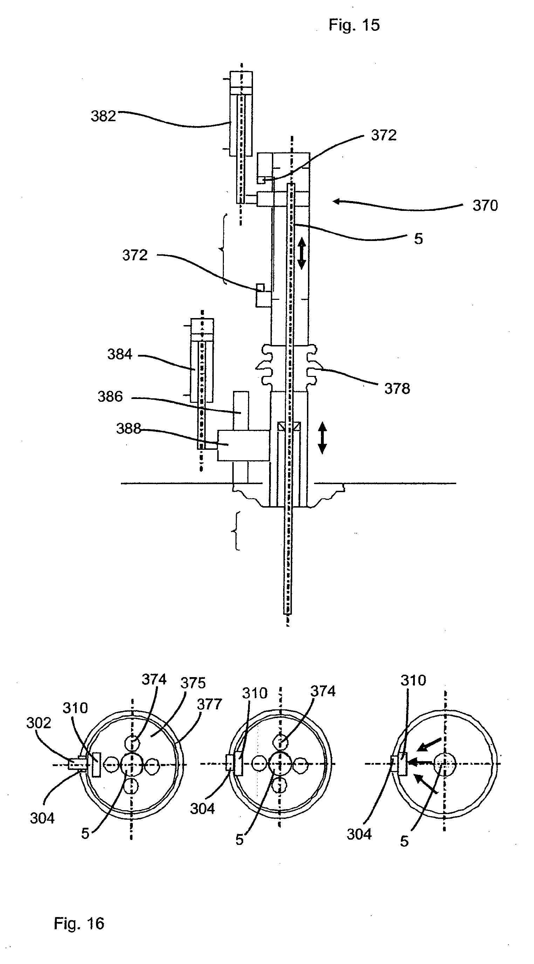

Fig. 15 zeigt eine weitere Ausführungsform einer erfindungsgemäßen Reckstangenbewegungseinrichtung. Dabei ist auch hier wieder die Reckstange 5 vorgesehen, die an einem Kopplungselement 370 angeordnet ist. Bei der in Fig. 15 gezeigten Ausführungsform ist jedoch die Reckstange nicht magnetisch mit dem Antrieb 382 gekoppelt, sondern unmittelbar mechanisch. Bei der in Fig. 15 gezeigten Ausführungsform ist jedoch eine Dichtungseinrichtung 310 wie ein Dichtungsband vorgesehen, welches eine Öffnung 304 (vgl. Fig. 16) abdeckt, die innerhalb des Gehäuses 377 angeordnet ist. Auf diese Weise wird auch bei dieser Ausführungsform eine Abdichtung des Reckstangenraums erreicht.

Die Fig. 16 zeigen drei Darstellungen zur Veranschaulichung dieses Sachverhalts. Bei dem linken Teilbild von Fig. 16 ist dieses Dichtungsband 310 in den Bewegungskörper 375 bzw. das Kolbenelement eingearbeitet und das Kopplungselement 302 ist ebenfalls unmittelbar an dem Kolbenelement 375 befestigt. Auf diese Weise wird erreicht, dass sich das Dichtungsband zuverlässig mit dem Kolbenelement 375 mitbewegt und außerhalb des Kolbens gleichwohl die Öffnung 304, die hier als langgestreckte Öffnung ausgeführt ist, abdeckt. Bei der Darstellung im mittleren Bild von Fig. 16 ist die Dichtungseinrichtung 310 am Außenumfang oder an einem Bereich des Außenumfangs des Kolbenkörpers 375 angeordnet, und dichtet ebenfalls die Öffnung 304 ab. Das mittlere Bild zeigt damit einen Schnitt durch das gleiche Element wie in dem linken Teilbild, bloß geringfügig nach unten oder nach oben versetzt, wodurch erkennbar ist, dass hier die Dichtungseinrichtung 310 die Öffnung 304 verschließt. In dem rechten Teilbild ist ein Schnitt außerhalb des Bereichs des Kolbenelements 375 gezeigt. In diesem Bereich erkennt man, dass durch den erhöhten Luftdruck im Inneren des Gehäuses 377 das Dichtungsband 310 an die Öffnung 304 angedrückt wird und diese verschließt.

Die Anmelderin behält sich vor, sämtliche in den Anmeldungsunterlagen offenbarten Merkmale werden als erfindungswesentlich zu beanspruchen, sofern sie einzeln oder in Kombination gegenüber dem Stand der Technik neu sind.

### Bezugszeichenliste

- 1: Umformungsvorrichtung
- 2: Transportrad
- 5: Reckstange
- 6: Reinraum
- 8: Blasstation
- 10: Kunststoffvorformlinge, Behältnis
- 10a: Mündung
- 10b: Tragring des Kunststoffvorformlings
- 11: Folgeeinrichtung
- 12: Schlitten
- 13: Boden
- 14: Halterung
- 15: Knick
- 16: Seitenwand
- 17: Deckel
- 18: Wandung
- 19: senkrechte Wandung
- 20: Kunststoffbehältnis
- 22: Zuführeinrichtung
- 23: Halteeinrichtung
- 24: Abführeinrichtung
- 25: Dichtungseinrichtung
- 26: Träger
- 27: Dichtungseinrichtung
- 29: Haltekörper
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- 50: Anlage
- 100: Blasformträger
- 106: Bodenteil
- 112, 116, 210, 216: Antriebseinrichtung
- 166, 168: Wasserschlösser
- 166a, 168a: ringförmige Kanäle
- 166b, 168b: ringförmige Segmente
- 172, 174: Seitenführungen
- 200: Beaufschlagungseinrichtung, Blasdüse
- 200a: Blasdüse
- 200b: Blaskolben
- 200c: Unterseite der Beaufschlagungseinrichtung
- 202: Raum
- 203: Zuführleitung
- 204: Ventilblock
- 206: Zuführung
- 208: Federungseinrichtung
- 210: Zuführleitung
- 211,271: Führungsrolle
- 212, 272: Schlitten
- 214: Dichtungseinrichtung
- 216: Kanal
- 218,220, 226, 234, 240: Dichtungseinrichtung
- 222: Faltenbalg
- 224: Träger
- 225: Gassperre, Dampfsperre
- 228: zweite Dichtungseinrichtung
- 232: Aufnahmeraum
- 236: Verbindungsleitung
- 238: zweiter Abdichtungsraum
- 242: Temperatursensor
- 244: Faltenbalg
- 245: Befestigungsmittel
- 260: Dichtungseinrichtung (Stand der Technik)
- 266,268: Wasserschlösser
- 270: Antriebseinrichtung zum Bewegen der Reckstange
- 282: an den Tragring anlegbare Teile
- 284: in den Vorformling eingreifende Teile
- 286, 287: Verbindung
- 288: an den Blaskolben anliegende Teile
- 304: Öffnung
- 310: Dichtungseinrichtung, Dichtungsband
- 370: Kopplungseinrichtung
- 372: Endanschläge
- 374: Öffnungen
- 375: Kolbenelement
- 377: Gehäuse
- 378: magnetisches Element
- 379: Kopplungselement
- 381: umlaufender Spalt
- 384: Antriebseinrichtung
- 386: Führungseinrichtung
- 388: Kopplungselement
- 390: Träger
- 392: Dichtungseinrichtung
- 359: Befestigungselement

- L: Linie
- P1: Richtung
- P4: Pfeil
- P5: Pfeil
- S: Sterilraumgrenze
- U: Umgebung
- X: Achse
- Y: Richtung
- H1: Hub der Reckstange
- H2: Hub der Beaufschlagungseinrichtung
- A1: Fläche

## Patentansprüche

1. Vorrichtung (1) zum Umformen von Kunststoffvorformlingen (10) zu Kunststoffbehältnissen (20) mit einer Transporteinrichtung (2), an der eine Vielzahl von Blasstationen (8) angeordnet ist, wobei jede dieser Blasstationen (8) eine Blasform (100) aufweist und die Vorrichtung (1) einen Reinraum (6) aufweist, innerhalb dessen die Kunststoffvorformlinge (10) transportiert werden können, und wobei die jede Blasstation (8) eine gegenüber der Blasform (100) bewegliche Beaufschlagungseinrichtung (200) aufweist, welche die Kunststoffvorformlinge (10) innerhalb des Reinraums (6) mit einem gasförmigen Medium beaufschlagt und eine Antriebseinrichtung (210) zum Bewegen der Beaufschlagungseinrichtung (200) vorgesehen ist
**dadurch gekennzeichnet, dass**
die Antriebseinrichtung (210) in einem Bereich (U) außerhalb des Reinraums (6) angeordnet ist und eine Dichtungseinrichtung (220) vorgesehen ist, welche den Reinraum (6) gegenüber einem Bereich, in dem die Antriebseinrichtung (210) angeordnet ist, abdichtet.

2. Vorrichtung (1) nach Anspruch 1,
**dadurch gekennzeichnet, dass**
die Dichtungseinrichtung (220) ein elastisches Dichtmittel (222) oder eine Gassperre (225) aufweist.

3. Vorrichtung (1) nach wenigstens einem der vorangegangenen Ansprüche,
**dadurch gekennzeichnet, dass**
an jeder Blasstation (8) eine Reckstange (5) zum Recken der Kunststoffvorformlinge (10) angeordnet ist.

4. Vorrichtung (1) nach Anspruch 3,
**dadurch gekennzeichnet, dass**
die Reckstange (5) wenigstens teilweise innerhalb des Reinraums (6) angeordnet ist und mittels Dichtmitteln (228, 234, 377) gegenüber dem Bereich (U) außerhalb des Reinraums (6) abgedichtet ist.

5. Vorrichtung (1) nach wenigstens einem der vorangegangenen Ansprüche 3 - 4,
**dadurch gekennzeichnet, dass**
die Vorrichtung (1) eine außerhalb des Reinraums (6) angeordnete Antriebseinrichtung zum Bewegen der Reckstange (5) aufweist und diese Antriebseinrichtung über eine erste magnetische Kopplungseinrichtung (370) mit der Reckstange (5) gekoppelt ist.

6. Vorrichtung (1) nach wenigstens einem der vorangegangenen Ansprüche,
**dadurch gekennzeichnet, dass**
die Beaufschlagungseinrichtung (200) wenigstens zeitweise durch das gasförmige Medium zum Beaufschlagen der Kunststoffvorformlinge in Richtung der Kunststoffvorformlinge gedrängt ist.

## Claims

1. Apparatus (1) for shaping plastic preforms (10) into plastic containers (20), comprising a transport device (2) on which a plurality of blow moulding stations (8) are arranged, wherein each of these blow moulding stations (8) comprises a blow mould (100), and the apparatus (1) comprises a clean chamber (6) inside which the plastic preforms (10) can be transported, and wherein each blow moulding station (8) comprises an application device (200) which is movable relative to the blow mould (100) and which applies a gaseous medium to the plastic preforms (10) inside the clean chamber (6), and a drive device (210) is provided for moving the application device (200), **characterised in that** the drive device (210) is arranged in an area (U) outside the clean chamber (6) and a sealing device (220) is provided which seals off the clean chamber (6) from an area in which the drive device (210) is arranged.

2. Apparatus (1) according to claim 1, **characterised in that** the sealing device (220) comprises an elastic sealing means (222) or a gas barrier (225).

3. Apparatus (1) according to at least one of the preceding claims, **characterised in that** a stretching rod (5) for stretching the plastic preforms (10) is arranged on each blow moulding station (8).

4. Apparatus (1) according to claim 3, **characterised in that** the stretching rod (5) is arranged at least partially inside the clean chamber (6) and is sealed off from the area (U) outside the clean chamber (6) by sealing means (228, 234, 377).

5. Apparatus (1) according to at least one of the preceding claims 3 - 4, **characterised in that** the apparatus (1) comprises a drive device arranged outside the clean chamber (6) for moving the stretching rod (5) and this drive device is coupled to the stretching rod (5) via a first magnetic coupling device (370).

6. Apparatus (1) according to at least one of the preceding claims, **characterised in that** the application device (200) is pushed in the direction of the plastic preforms at least at times by the gaseous medium for application to the plastic preforms.

## Revendications

1. Installation (1) pour la transformation de préformes en matière plastique (10) en récipients en matière plastique (20), avec un dispositif de transport (2) sur lequel sont disposées plusieurs stations de soufflage (8), chacune desdites stations de soufflage (8) comportant un moule de soufflage (100) et l'installation (1) étant pourvue d'un espace stérile (6) à l'intérieur duquel les préformes en matière plastique (10) peuvent être transportées, et chaque station de soufflage (8) comportant un dispositif d'application (200) mobile par rapport au moule de soufflage (100), lequel applique un fluide gazeux dans les préformes en matière plastique (10) à l'intérieur de l'espace stérile (6), et un dispositif d'entraînement (210) étant prévu pour le déplacement du dispositif d'application (200),
**caractérisée en ce que**
le dispositif d'entraînement (210) est disposé dans une zone (U) extérieure à l'espace stérile (6) et **en ce qu'**un dispositif d'étanchéité (220) est prévu, lequel rend étanche l'espace stérile (6) par rapport à une zone où est disposé le dispositif d'entraînement (210).

2. Installation (1) selon la revendication 1, **caractérisée en ce que**
le dispositif d'étanchéité (220) comprend un élément d'étanchéité élastique (222) ou une barrière aux gaz (225).

3. Installation (1) selon au moins une des revendications précédentes, **caractérisée en ce que**
une barre d'étirage (5) est disposée sur chaque station de soufflage (8) pour l'étirage des préformes en matière plastique (10).

4. Installation (1) selon la revendication 3, **caractérisée en ce que**
la barre d'étirage (5) est disposée au moins partiellement à l'intérieur de l'espace stérile (6) et est rendue étanche par rapport à la zone (U) extérieure à l'espace stérile (6) au moyen d'éléments d'étanchéité (228, 234, 377).

5. Installation (1) selon au moins une des revendications 3 et 4, **caractérisée en ce que**
ladite installation (1) comporte un dispositif d'entraînement pour le déplacement de la barre d'étirage (5), disposé à l'extérieur de l'espace stérile (6), et **en ce que** ledit dispositif d'entraînement est accouplé à la barre d'étirage (5) par un premier dispositif d'accouplement magnétique (370).

6. Installation (1) selon au moins une des revendications précédentes, **caractérisée en ce que**
le dispositif d'application (200) est au moins temporairement contraint par le fluide gazeux vers les préformes en matière plastique pour le traitement des préformes en matière plastique.
